# EUROPÄISCHE PATENTSCHRIFT

(11) **EP 2 448 798 B1**
(45) Veröffentlichungstag und Bekanntmachung des Hinweises auf die Patenterteilung: **29.04.2015**
(21) Anmeldenummer: 10726969.8
(22) Anmeldetag: 24.06.2010
(51) Int. Cl.: B60T 8/36, B60T 15/02

(54) **DRUCKSTEUERVENTILANORDNUNG UND HERSTELLUNGSVERFAHREN DAFÜR**
PRESSURE CONTROL VALVE ARRANGEMENT AND MANUFACTURING METHOD THEREFOR
ENSEMBLE MODULATEUR DE PRESSION ET SA METHODE DE FABRICATION

(30) Priorität: 29.06.2009 DE 102009030899
(43) Veröffentlichungstag der Anmeldung: 09.05.2012
(73) Patentinhaber: KNORR-BREMSE Systeme für Nutzfahrzeuge GmbH, 80809 München (DE)
(72) Erfinder: GREBE, Jan, 80939 München (DE); BRENNER, Dirk, 70563 Stuttgart (DE); WEIPPERT, Jochen, 80805 München (DE); ROHN, Wolfgang, 81247 München (DE); JAEHNS, Harald, 81549 München (DE)
(74) Vertreter: Schönmann, Kurt
(86) Internationale Anmeldenummer: PCT/EP2010/058990
(87) Internationale Veröffentlichungsnummer: WO 2011/000769

(56) Entgegenhaltungen:
- EP-A1- 0 266 555
- WO-A1-2005/047072
- DE-U1- 8 619 384
- JP-A- 7 223 524

## Beschreibung

Die Erfindung betrifft eine Drucksteuerventilanordnung zur Steuerung des Fluiddrucks in einer ABS-Bremsanlage eines Fahrzeugs gemäß dem Oberbegriff von Anspruch 1 sowie von einem Verfahren zu seiner Herstellung gemäß dem Oberbegriff von Anspruch 11.

ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

ABS-Drucksteuerventilanordnungen ohne Relaiswirkung, auf welche sich die vorliegende Erfindung bezieht, finden bei Fahrzeugen wie beispielsweise Nutzfahrzeugen, Omnibussen, Sattelzugmaschinen wie auch bei Anhängern Verwendung. Drucksteuerventilanordnungen ohne Relaiswirkung verfügen meist über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird.

Drucksteuerventile der gattungsgemäßen Art als 1-Kanal-Drucksteuerventile für Blockierschutzanlagen von Kraftfahrzeugen weisen innerhalb des Gehäuses je ein Membranventil als Halteventil und als Auslassventil auf sowie je ein elektromagnetisches Steuerventil für das Halteventil und das Auslassventil auf. Die beiden Membranventile beinhalten jeweils eine mit dem Druck in einer Steuerkammer beaufschlagbare Membrane, wobei die Steuerkammer durch einen am Gehäuse befestigten Deckel nach außen hin verschlossen ist.

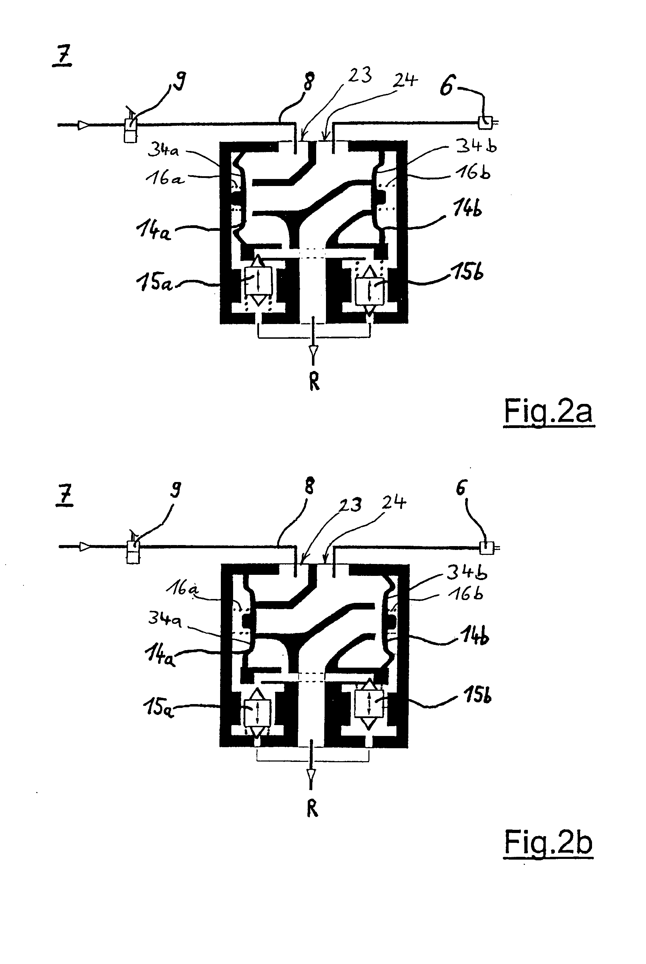

Eine gattungsgemäße Drucksteuerventilanordnung einer ABS-Bremsanlage ist beispielsweise aus der EP 0 266 555 A1 bekannt. Bei den Drucksteuerventilanordnungen des Stands der Technik weist das Gehäuse einen Druckmittelanschluss zur Druckbeaufschlagung und/oder Druckentlastung auf, welcher mit einem Fußbremsventil verbunden ist. Weiterhin sind die beiden Membranventile am Gehäuse seitlich angeordnet, wobei die entsprechenden Vorsteuerräume durch seitlich am Gehäuse befestigte Deckel verschlossen sind. Diese Deckel werden durch Urformverfahren wie Spritzgießen hergestellt, wobei beim Spritzgießen bereits Durchgänge bzw. Querkanäle bereits berücksichtigt werden, jedoch einseitig offene Querkanäle durch zusätzliche Kunststoff-Verschlussteile abgedeckt werden müssen. Beispielsweise weist ein dort in Fig.2 gezeigter Deckel zwar einen Querkanal auf, welcher eine zur Steuerkammer hin offene Sacklochbohrung und eine in einen Druckmittelkanal im Gehäuse mündende Sacklochbohrung miteinander verbindet und welche im Laufe des Spritzgiessverfahrens teilweise fertig gestellt' wird. Jedoch ist dieser Querkanal gusstechnisch bedingt gehäuseaußenseitig offen und muss durch ein separates Verschlussteil verschlossen werden. Die Herstellung dieses Verschlussteils sowie seine Montage auf dem Deckel ist jedoch mit zusätzlichen Kosten verbunden, was angesichts der hohen Anzahl von einem Zulieferer für Fahrzeuge gelieferte Drucksteuerventilanordnungen in der Summe einen relativ hohen Kostenbetrag ausmacht.

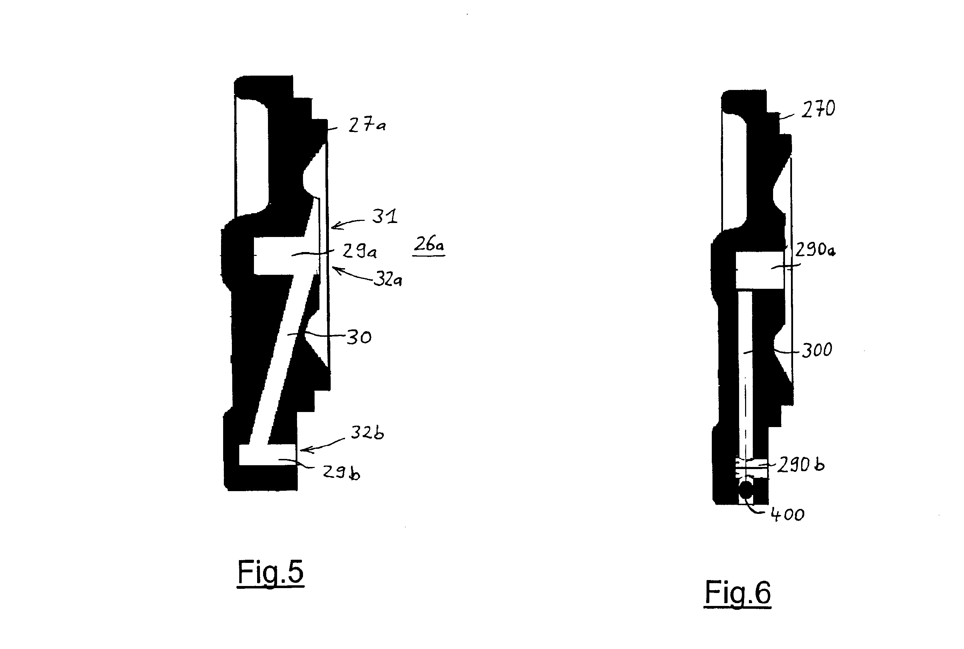

Falls ein solcher Querkanal 300 im Deckel 270 nicht teilweise urgeformt, sondern durch spanabhebende Fertigung hergestellt wird, so ergibt sich das Problem, dass dann der sich zwischen den Sacklöchern 290a, 290b erstreckende Querkanal 300 bedingt durch das Eindringen eines Bohrers von einer radial äußeren Randfläche des Deckels 270 her eine unerwünschte Öffnung an dieser Randfläche entsteht, welche beispielsweise durch eine in die Öffnung eingesetzte Kugel 400 wieder verschlossen werden muss, wie aus Fig.6 hervorgeht, welche diesen Stand der Technik repräsentiert. Auch bei dieser Methode entstehen folglich zusätzliche Kosten durch die Herstellung und die Montage der Kugel 400. Ein solcher Stand der Technik ist beispielsweise aus der JP 0 722 3524 A bekannt.

Bei einem in der WO 2005/047072 A1 beschriebenen Hydraulikaggregat sind in einem blockförmigen Aufnahmekörper Schrägkanäle zwischen einer Pumpenbohrung und einer Geräuschdämpfungskammer ausgebildet, welche durch einen Bohrer hergestellt sind. Die Schrägkanäle sind zur Gehäuseaußenseite hin durch Verschlusskörper verschlossen.

Der Erfindung liegt demgegenüber die Aufgabe zugrunde, eine Drucksteuerventilanordnung der eingangs erwähnten Art derart weiter zu bilden, dass sie einfacher und kostengünstiger zu fertigen und zu montieren ist. Weiterhin soll ein entsprechendes Herstellverfahren angegeben werden. Diese Aufgabe wird erfindungsgemäß durch die Merkmale von Anspruch 1 und Anspruch 11 gelöst.

### Offenbarung der Erfindung

Wie bereits oben erwähnt, schafft der Querkanal eine Strömungsverbindung der Sacklöcher untereinander, von denen ein Sackloch mit der Steuerkammer und das andere Sackloch mit dem im Gehäuse ausgebildeten Druckmittelkanal kommuniziert, um die Steuerkammer mit Druckmittel zu beaufschlagen bzw. diese von Druckmittel zu entlasten.

Die Erfindung schlägt vor, dass der Querkanal bezogen auf die Ebene des Deckels einen spitzen Winkel aufweist und mittels einer Querkanal-Mündungsöffnung einendseitig in die Steuerkammer oder in den Druckmittelkanal mündet, wobei sich die Querkanal-Mündungsöffnung mit der Sackloch-Mündungsöffnung von einem der durch den Querkanal verbundenen Sacklöcher wenigstens teilweise überdeckt.

Bedingt durch diese Geometrie kann wenigstens der Querkanal bereits beim Urformen vollständig und einstückig mit dem Deckel hergestellt werden. Der Deckel mit dem Querkanal wird daher urgeformt, bevorzugt als Spritzgussformling aus Kunststoff oder Aluminium, wobei während des Urformens des Deckels ein dornartiger Kern des Urformwerkzeugs derart positioniert wird bzw. an dem Urformwerkzeug vorhanden ist, dass der durch den Kern erzeugte Querkanal bezogen auf die Ebene des Deckels einen spitzen Winkel aufweist und mittels einer Querkanal-Mündungsöffnung in die Steuerkammer oder in den Druckmittelkanal mündet. Anschließend oder im Rahmen des Urformprozesses gleichzeitig werden wenigstens zwei Sacklöcher an derartigen Positionen des Deckels gefertigt, dass sie durch den Querkanal miteinander verbunden werden und sich die Querkanal-Mündungsöffnung mit der Sackloch-Mündungsöffnung eines der durch den Querkanal verbundenen Sacklöcher wenigstens teilweise überdeckt.

Die hohe Stückzahl von im Automobilbau Drucksteuerventilanordnungen und die daher auch hohe Stückzahl von Deckeln rechtfertigt ein etwas aufwändigeres Spritzgußwerkzeug mit dornartigem Kern. Demgegenüber brauchen keine zusätzlichen Verschlussteile für unerwünschte Bohrungen oder Öffnungen des Querkanals mehr gefertigt und montiert werden, was demgegenüber höhere Kosten verursacht.

Die Alternative der spanabhebenden Fertigung eines solchen dann schräg verlaufenden Querkanals im Deckel hat den Nachteil, dass der Deckel im Bearbeitungszentrum umgespannt werden müsste, um neben den rechtwinkelig zum Deckel gefertigten Sacklöchern hergestellt werden zu können. Das Umspannen des Deckels zur Fertigung nur eines Querkanals ist jedoch mit einem hohen Aufwand verbunden und daher auch kostenträchtig.

Durch die in den Unteransprüchen aufgeführten Maßnahmen sind vorteilhafte Weiterbildungen und Verbesserungen der in Anspruch 1 und Anspruch 11 angegebenen Erfindung möglich.

Bedingt durch den oben beschriebenen Fertigungsprozess hat die Querkanal-Mündungsöffnung in die Steuerkammer oder in den Druckmittelkanal einen im wesentlichen ovalen Querschnitt, während der Querschnitt des Querkanals in einer Ebene senkrecht zur Mittelachse des Querkanals gesehen bevorzugt zylindrisch ist.

Gemäß einer Weiterbildung mündet der Querkanal anderendseitig in das andere durch den Querkanal verbundene Sackloch bezogen auf dessen Mittelachse in einem spitzen Winkel, wobei der Querkanal in dem anderen Sackloch bodenseitig endet und sich nicht weiter über das andere Sackloch hinaus erstreckt.

Gleichzeitig kann wenigstens ein Deckel so ausgebildet sein, dass er neben seiner Funktion als Verschlusskörper für die Steuerkammer zugleich eine im Gehäuse ausgebildete und nicht zur Verbindung mit der Steuerkammer vorgesehene Bohrung verschließt, welche in eine Seitenfläche des Gehäuses mündet. Dann muss kein zusätzlicher Verschluss für diese Bohrung hergestellt und montiert werden.

Gemäß einer Weiterbildung des erfindungsgemäßen Herstellverfahrens werden die Sacklöcher zusammen mit dem Querkanal während des Urformprozesses des Deckels in einem Arbeitsgang durch Vorsehen entsprechender Sackloch-Kerne am Urformwerkzeug hergestellt.

Alternativ können die Sacklöcher auch erst nach dem Urformen des Deckels durch spanabhebende Fertigung wie Bohren gefertigt werden.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig. 2a: eine schematische Darstellung einer einen Bremszylinder ansteuernden Drucksteuerventilanordnung im geöffneten Zustand (Druckaufbau),
- Fig. 2b: eine schematische Darstellung der Drucksteuerventilanordnung von Figur 2a im geschlossenen Zustand (Druckabbau),
- Fig.3: eine Seitenansicht einer konkreten Ausführung der Drucksteuerventilanordnung von Fig.2a und Fig.2b gemäß einer bevorzugten Ausführungsform der Erfindung;
- Fig.4: eine Schnittdarstellung entlang der Linie IV-IV von Fig.3;
- Fig.5: eine **Schnittdarstellung eines** Deckels der Drucksteuerventilanordnung von Fig.3;
- Fig.6: eine Schnittdarstellung eines Deckels einer Drucksteuerventilanordnung gemäß dem Stand der Technik.

### Beschreibung des Ausführungsbeispiels

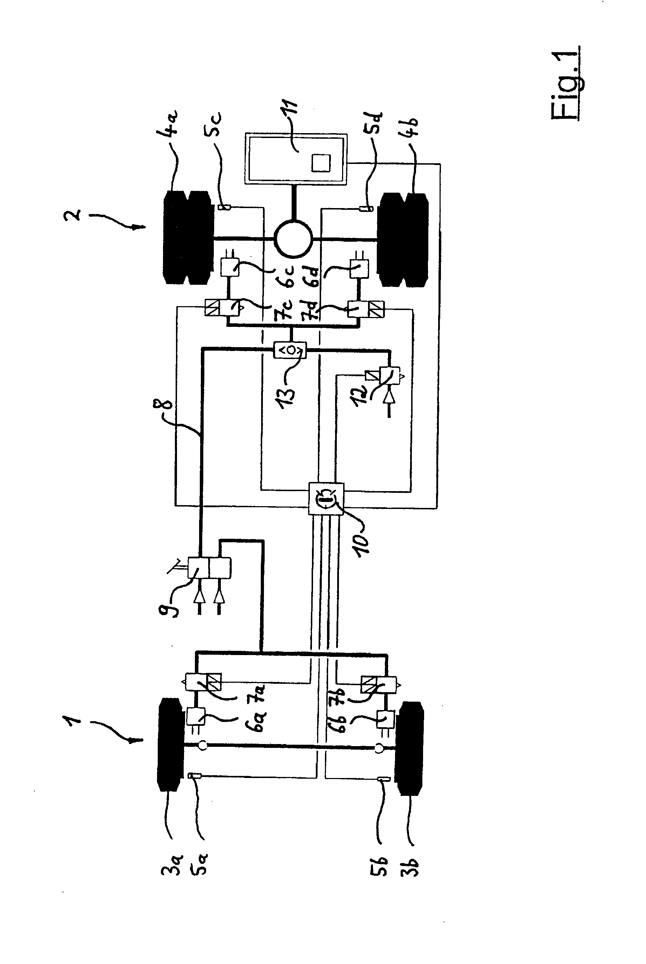

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

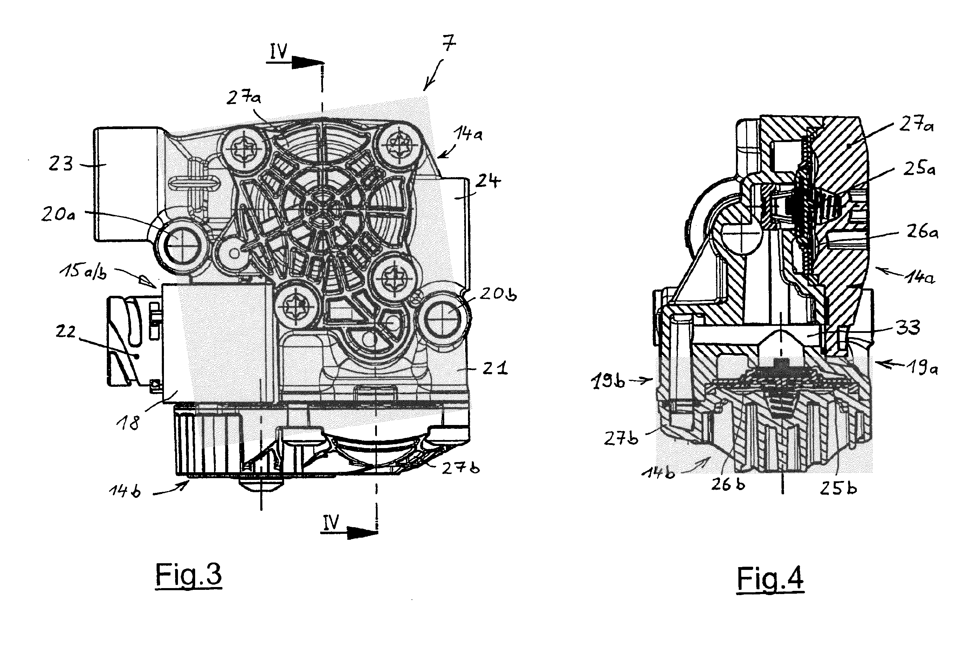

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zwecke mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Fig.2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Die Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Fig. 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 15a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

In Fig.3 bis Fig.5 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

Die beiden Elektromagnetventile 15a, 15b weisen einen in einem Block 17 zusammengefassten Doppelmagneten 18 mit zwei Magnetspulen auf, welche mit zwei Magnetventilsitzen zusammen wirken. Durch Bestromung der Magnetspulen werden mit den Magnetventilsitzen der Elektromagnetventile 15a, 15b zusammen wirkende und hier nicht explizit gezeigte Magnetanker als Ventilschließglieder betätigt.

Der den Doppelmagneten 18 umfassende Block 17 ist an einem Gehäuse 21 der Drucksteuerventilanordnung 7 vorzugsweise frontseitig befestigt und weist einen Steckeranschluss 22 zur Stromversorgung des Doppelmagneten 18 auf. Dieses Gehäuse 21 weist weiterhin einen Druckmittelanschluss 23 zur Druckbeaufschlagung und/oder Druckentlastung der Drucksteuerventilanordnung 7 sowie einen Arbeitsanschluss 24 zum Anschluss des Bremszylinders 6 auf (Fig.3).

Der Druckmittelanschluss 23 ist, wie Fig.2a und Fig.2b zeigen, über die Bremsdruckleitung 8 mit dem Fuß- oder Betriebsbremsventil 9 der druckmittelbetätigten Bremseinrichtung verbunden und wird entsprechend einer Betätigung des Fußbremsventils 9 be- oder entlüftet.

Wie insbesondere aus Fig.3 hervorgeht, ist das Gehäuse 21 mit wenigstens einer, hier beispielsweise zwei in beide Seitenflächen 19a, 19b des Gehäuses 21 mündenden Durchgangsbohrungen 20a, 20b versehen, durch welche Haltemittel zum Halten der Drucksteuerventilanordnung an einem Trägerkörper, beispielsweise an einem Chassis des Fahrzeugs hindurch ragen, beispielsweise Schrauben. Die Mittelachsen der beiden Durchgangsbohrungen 20a, 20b sind bevorzugt parallel zueinander. Die axiale Länge der Durchgangsbohrungen 20a, 20b gilt als standardisiertes Einbaumaß der Drucksteuerventilanordnung 7 und ist aus Platzgründen festgelegt und nicht veränderbar, sie legt die maximal zulässige Breite B des Gehäuses 21 fest.

Das eine Membranventil 14a ist bevorzugt seitlich und das andere Membranventil 14b bevorzugt bodenseitig am Gehäuse 21 angeordnet, wie Fig.4 zeigt. Ein solches Membranventil 14a, 14b weist als Ventilkörper eine Membrane 25a, 25b auf, die durch Einleiten von Druckmittel in eine Steuerkammer 26a, 26b beaufschlagbar ist, die gehäuseaußenseitig jeweils durch einen mittels Urformen wie Spritzgießen hergestellten Deckel 27a, 27b abgedeckt ist, welcher am Gehäuse 21 befestigt ist. Dabei wird die Steuerkammer 26a, 26b zwischen der Membrane 25a, 25b und dem Deckel 27a, 27b ausgebildet. In dem Deckel 27a, 27b sind im wesentlichen senkrecht zur Ebene des Deckels 25a, 25b verlaufende, zur Steuerkammer 26a, 26b hin mit einer Sackloch-Mündungsöffnung 32a, 32b in die Steuerkammer 26a, 26b bzw. in wenigstens einen Druckmittelkanal im Gehäuse 21 mündende Sacklöcher 29a, 29b (Fig.5) ausgebildet, von denen wenigstens zwei Sacklöcher 29a, 29b durch wenigstens einen Querkanal 30 miteinander in Strömungsverbindung stehen. In der Einzeldarstellung eines Deckels 27a von Fig.5 sind solche Sacklöcher 29a, 29b, hier bevorzugt zwei, sowie der Querkanal 30 schematisch dargestellt. Alternativ können durch einen solchen Querkanal auch mehr als zwei Sacklöcher 29a, 29b miteinander verbunden sein.

Aus diesem Grund ist in Fig.5 ein Deckel 27a in separater Ansicht gezeigt, bei welchem ein Querkanal 30 sich zwischen zwei Sacklöchern 29a, 29b erstreckt.

Der Querkanal 30 schafft eine Strömungsverbindung der Sacklöcher 29a, 29b untereinander, von denen ein Sackloch 29a mit der Steuerkammer 26a und das andere Sackloch 29b sich beispielsweise mit der Mündung eines im Gehäuse 21 ausgebildeten und hier nicht explizit gezeigten Druckmittelkanals kommuniziert, um die Steuerkammer 26a mit Druckmittel zu beaufschlagen bzw. diese von Druckmittel zu entlasten.

Wie dort dargestellt, weist der Querkanal 30 bezogen auf die Ebene des Deckels 27a, d.h. die Plattenebene des plattenförmigen Deckels 27a, einen spitzen Winkel auf und mündet mittels einer Querkanal-Mündungsöffnung 31 vorzugsweise in die Steuerkammer 26a. Die Querkanal-Mündungsöffnung 31 des Querkanals 30 in der Steuerkammer 26a überdeckt sich mit der Sackloch-Mündungsöffnung 32a von dem Sackloch 29a der durch den Querkanal 30 verbundenen Sacklöcher 29a, 29b, welches einem Zentrum oder einer Mittelachse des Deckels 27a am nächsten liegt. Folglich verläuft der Querkanal 30 bezogen auf die Ebene des Deckels 27a bevorzugt von radial innen nach radial außen und in axialer Richtung gesehen vom Gehäuse 21 weg.

Der Deckel 27a mit dem Querkanal 30 wird einstückig urgeformt, bevorzugt als Spritzgussformling aus Kunststoff oder Aluminium. Während des Urformens des Deckels 27a wird ein dornartiger Kern des Urformwerkzeugs derart positioniert wird bzw. ist an dem Urformwerkzeug vorhanden, dass der durch den Kern erzeugte Querkanal 30 bezogen auf die Ebene des Deckels 27a einen spitzen Winkel aufweist und mittels der Querkanal-Mündungsöffnung 31 bevorzugt in die Steuerkammer 26a mündet. Anschließend oder im Rahmen des Urformprozesses gleichzeitig werden die beiden Sacklöcher 29a, 29b an derartigen Positionen des Deckels 27a gefertigt, dass sie durch den Querkanal 30 miteinander verbunden werden und sich die Querkanal-Mündungsöffnung 31 mit der Sackloch-Mündungsöffnung 32a des zentraler angeordneten Sacklochs 29a wenigstens teilweise überdeckt.

Der Querkanal 30 mündet dabei in das andere durch den Querkanal 30 verbundene Sackloch 29b bezogen auf dessen Mittelachse in einem spitzen Winkel, wobei der Querkanal 30 in dem anderen Sackloch 29b bevorzugt an dessen Boden endet und sich nicht weiter über das andere Sackloch 29b hinaus erstreckt und insbesondere die Wandung des Deckels 27a nicht nochmals durchdringt.

Dabei werden die Sacklöcher 29a, 29b bevorzugt zusammen mit dem Querkanal 30 während des Urformprozesses des Deckels 27a in einem Arbeitsgang durch Vorsehen entsprechender Sackloch-Kerne am Urformwerkzeug hergestellt. Alternativ können die Sacklöcher 29a, 29b jedoch auch erst nach dem Urformen des Deckels 27a durch spanabhebende Fertigung wie Bohren gefertigt werden.

Bedingt durch den oben beschriebenen Fertigungsprozess hat die Querkanal-Mündungsöffnung 31 in die Steuerkammer 26a einen im wesentlichen ovalen Querschnitt, während der Querschnitt des Querkanals 30 in einer Ebene senkrecht zur Mittelachse des Querkanals 30 gesehen bevorzugt zylindrisch ist.

Gleichzeitig kann der Deckel 27a so ausgebildet sein, dass er neben seiner Funktion als Verschlusskörper für die Steuerkammer 26a zugleich eine im Gehäuse 21 ausgebildete und nicht zur Verbindung mit der Steuerkammer 26a vorgesehene Bohrung 33 verschließt, welche beispielsweise in eine Seitenfläche 19a, 19b des Gehäuses 21 mündet (Fig.4).

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14 a/b: Membranventil
- 15 a/b: Elektromagnetventil
- 16 a/b: Federelement
- 17: Block
- 18: Doppelmagnet
- 19 a/b: Seitenfläche
- 20 a/b: Durchgangsbohrung
- 21: Gehäuse
- 22: Steckeranschluss
- 23: Druckmittelanschluss
- 24: Arbeitsanschluss
- 25 a/b: Membrane
- 26 a/b: Steuerkammer
- 27 a/b: Deckel
- 29 a/b: Sacklöcher
- 30: Querkanal
- 31: Querkanal-Mündungsöffnung
- 32 a/b: Sackloch-Mündungsöffnung
- 33: Bohrung
- 270: Deckel
- 290 a/b: Sacklöcher
- 300: Querkanal
- 400: Kugel

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder (6) adaptiv anpassbar ist, wobei in einem Gehäuse (21) der Drucksteuerventilanordnung (7) wenigstens ein Membranventil (14a, 14b) aufgenommen ist, welches als Ventilkörper eine Membrane (25a, 25b) aufweist, die durch Einleiten von Druckmittel in eine Steuerkammer (26a, 26b) beaufschlagbar ist, die gehäuseaußenseitig jeweils durch einen mittels Urformen wie Spritzgießen hergestellten Deckel (27a, 27b) abgedeckt ist, derart, dass die Steuerkammer (26a, 26b) zwischen der Membrane (25a, 25b) und dem Deckel (27a, 27b) ausgebildet wird, und wobei in dem Deckel (27a, 27b) im wesentlichen senkrecht zur Ebene des Deckels (27a, 27b) verlaufende Sacklöcher (29a, 29b) ausgebildet sind, von denen wenigstens ein Sackloch (29a) mit seiner Sackloch-Mündungsöffnung (32a) in die Steuerkammer (26a, 26b) und wenigstens ein anderes Sackloch (29b) mit seiner Sackloch-Mündungsöffnung (32b) in einen im Gehäuse (21) ausgebildeten Druckmittelkanal mündet und wenigstens das eine Sackloch (29a) und das andere Sackloch (29b) durch wenigstens einen Querkanal (30) miteinander in Strömungsverbindung stehen, **dadurch gekennzeichnet, dass** der Querkanal (30) bezogen auf die Ebene des Deckels (27a, 27b) einen spitzen Winkel aufweist und einendseitig mittels einer Querkanal-Mündungsöffnung (31) in die Steuerkammer (26a, 26b) oder in den Druckmittelkanal mündet, wobei sich die Querkanal-Mündungsöffnung (31) mit der Sackloch-Mündungsöffnung (32a) von einem der durch den Querkanal (30) verbundenen Sacklöcher (29a) wenigstens teilweise überdeckt.

2. Drucksteuerventilanordnung nach Anspruch 1, **dadurch gekennzeichnet, dass** die Querkanal-Mündungsöffnung (31) einen im wesentlichen ovalen Querschnitt hat.

3. Drucksteuerventilanordnung nach Anspruch 1 oder 2, **dadurch gekennzeichnet, dass** der Querschnitt des Querkanals (30) in einer Ebene senkrecht zur Mittelachse des Querkanals (30) zylindrisch ist.

4. Drucksteuerventilanordnung nach einem der vorhergehenden Ansprüche, **dadurch gekennzeichnet, dass** der Deckel (27a, 27b) ein Spritzgussformling aus Kunststoff oder aus Aluminium ist.

5. Drucksteuerventilanordnung nach einem der vorhergehenden Ansprüche, **dadurch gekennzeichnet, dass** der Querkanal (30) anderendseitig in das andere durch den Querkanal (30) verbundene Sackloch (29b) bezogen auf dessen Mittelachse in einem spitzen Winkel mündet.

6. Drucksteuerventilanordnung nach Anspruch 5, **dadurch gekennzeichnet, dass** der Querkanal (30) in dem anderen Sackloch (29b) bodenseitig endet.

7. Drucksteuerventilanordnung nach einem der vorhergehenden Ansprüche, **dadurch gekennzeichnet, dass** der Deckel (27a, 27b) samt Sacklöchern (29a, 29b) und Querkanal (30) einstückig ausgebildet ist.

8. Drucksteuerventilanordnung nach einem der vorhergehenden Ansprüche, **dadurch gekennzeichnet, dass** von einer elektronischen Steuereinrichtung (10) ansteuerbare elektromagnetische Steuerventile (15a, 15b) zum Vorsteuern der Membranventile (14a, 14b) vorgesehen sind.

9. Drucksteuerventilanordnung nach einem der vorhergehenden Ansprüche, **dadurch gekennzeichnet, dass** wenigstens ein Deckel (27a, 27b) derart ausgebildet ist, dass er neben seiner Funktion als Verschlusskörper für die Steuerkammer (26a, 26b) zugleich eine im Gehäuse (21) ausgebildete und nicht zur Verbindung mit der Steuerkammer (26a, 26b) vorgesehene Bohrung (33) verschließt, welche in eine Seitenfläche (19a, 19b) des Gehäuses (21) mündet.

10. Bremsschlupfgeregelte und druckmittelbetätigte Bremseinrichtung eines Fahrzeugs, beinhaltend wenigstens eine Drucksteuerventilanordnung (7) nach einem der vorhergehenden Ansprüche.

11. Verfahren zur Herstellung einer Drucksteuerventilanordnung (7) zur Steuerung des Fluiddrucks in einer ABS-Bremsanlage eines Fahrzeugs derart, dass während einer Blockierneigung einzelner Räder des Fahrzeugs der Bremsdruck in wenigstens einem zugeordneten Bremszylinder (6) adaptiv anpassbar ist, wobei in einem Gehäuse (21) der Drucksteuerventilanordnung (7) wenigstens ein Membranventil (14a, 14b) aufgenommen ist, welches als Ventilkörper eine Membrane (25a, 25b) aufweist, die durch Einleiten von Druckmittel in eine Steuerkammer (26a, 26b) beaufschlagbar ist, die gehäuseaußenseitig jeweils durch einen Deckel (27a, 27b) abgedeckt ist, derart, dass die Steuerkammer (26a, 26b) zwischen der Membrane (25a, 25b) und dem Deckel (27a, 27b) ausgebildet wird, und wobei in dem Deckel (27a, 27b) im wesentlichen senkrecht zur Ebene des Deckels (27a, 27b) verlaufende Sacklöcher (29a, 29b) ausgebildet sind, von denen wenigstens ein Sackloch (29a) mit seiner Sackloch-Mündungsöffnung (32a) in die Steuerkammer (26a, 26b) und wenigstens ein anderes Sackloch (29b) mit seiner Sackloch-Mündungsöffnung (32b) in einen im Gehäuse (21) ausgebildeten Druckmittelkanal mündet und wenigstens das eine Sackloch (29a) und das andere Sackloch (29b) durch wenigstens einen Querkanal (30) miteinander in Strömungsverbindung stehen, beinhaltend folgende Schritte:
a) Urformen des Deckels (27a, 27b),
**dadurch gekennzeichnet, dass**
b) während des Urformens des Deckels (27a, 27b) ein dornartiger Kern des Urformwerkzeugs derart positioniert wird, dass der Querkanal (30) bezogen auf die Ebene des Deckels (27a, 27b) einen spitzen Winkel aufweist und mittels einer Querkanal-Mündungsöffnung (31) in die Steuerkammer (26a, 26b) mündet, und
c) wenigstens zwei Sacklöcher (29a, 29b) an derartigen Positionen des Deckels (27a, 27b) gefertigt werden, dass sie durch den Querkanal (30) miteinander verbunden werden und sich die Querkanal-Mündungsöffnung (31) mit der Sackloch-Mündungsöffnung (32a) eines der durch den Querkanal (30) verbundenen Sacklöcher (29a) wenigstens teilweise überdeckt.

12. Verfahren zur Herstellung einer Drucksteuerventilanordnung nach Anspruch 11, **gekennzeichnet durch** Fertigen der Sacklöcher (29a, 29b) zusammen mit dem Querkanal (30) während des Urformprozesses des Deckels (27a, 27b) in einem Arbeitsgang **durch** Vorsehen entsprechender Sackloch-Kerne am Urformwerkzeug.

13. Verfahren zur Herstellung einer Drucksteuerventilanordnung nach Anspruch 11, **gekennzeichnet durch** Fertigen der Sacklöcher (29a, 29b) nach dem Urformen des Deckels (27a, 27b) **durch** spanabhebende Fertigung wie Bohren.

14. Verfahren zur Herstellung einer Drucksteuerventilanordnung nach einem der Ansprüche 11 bis 13, **dadurch gekennzeichnet, dass** der Deckel (27a, 27b) einstückig spritzgegossen wird.

## Claims

1. Pressure control valve arrangement (7) for controlling the fluid pressure in an ABS brake system of a vehicle in such a way that, while there is a tendency of individual wheels of the vehicle to lock, the brake pressure in at least one associated brake cylinder (6) can be adaptively adjusted, wherein at least one diaphragm valve (14a, 14b) is accommodated in a housing (21) of the pressure control valve arrangement (7), said diaphragm valve having a diaphragm (25a, 25b) as the valve body, which diaphragm can be acted upon by introducing a pressure medium into a control chamber (26a, 26b) that is covered on the outside of the housing by a respective cover (27a, 27b) produced by primary shaping, such as injection molding, in such a way that the control chamber (26a, 26b) is formed between the diaphragm (25a, 25b) and the cover (27a, 27b), and wherein blind holes (29a, 29b), which extend in the cover (27a, 27b) substantially perpendicularly to the plane of the cover (27a, 27b), are formed in the cover (27a, 27b), the blind hole opening (32a) of at least one (29a) of said blind holes leading into the control chamber (26a, 26b), and the blind hole opening (32b) of at least one other (29b) of said blind holes leading into a pressure medium channel formed in the housing (21), and at least one (29a) and the other (29b) of said blind holes being fluidically interconnected by at least one transverse channel (30), **characterized in that** the transverse channel (30) has an acute angle relative to the plane of the cover (27a, 27b) and opens at one end, by means of a transverse channel opening (31), into the control chamber (26a, 26b) or into the pressure medium channel, wherein the transverse channel opening (31) at least partially overlaps the blind hole opening (32a) of one of the blind holes (29a) connected by the transverse channel (30).

2. Pressure control valve arrangement according to Claim 1, **characterized in that** the transverse channel opening (31) has a substantially oval cross section.

3. Pressure control valve arrangement according to Claim 1 or 2, **characterized in that** the cross section of the transverse channel (30) is cylindrical in a plane perpendicular to the center line of the transverse channel (30).

4. Pressure control valve arrangement according to one of the preceding claims, **characterized in that** the cover (27a, 27b) is an injection molding made of plastic or aluminum.

5. Pressure control valve arrangement according to one of the preceding claims, **characterized in that** the transverse channel (30) opens at the other end into the other blind hole (29b) connected by the transverse channel (30), the entry being at an acute angle relative to the center line of said blind hole.

6. Pressure control valve arrangement according to Claim 5, **characterized in that** the transverse channel (30) ends at the bottom of the other blind hole (29b).

7. Pressure control valve arrangement according to one of the preceding claims, **characterized in that** the cover (27a, 27b), together with the blind holes (29a, 29b) and the transverse channel (30), is formed integrally.

8. Pressure control valve arrangement according to one of the preceding claims, **characterized in that** solenoid control valves (15a, 15b), which can be controlled by an electronic control device (10), are provided for pilot control of the diaphragm valves (14a, 14b).

9. Pressure control valve arrangement according to one of the preceding claims, **characterized in that** at least one cover (27a, 27b) is designed in such a way that, in addition to acting as a closure body for the control chamber (26a, 26b), it simultaneously closes a hole (33) which is formed in the housing (21), which is not provided for connection to the control chamber (26a, 26b) and opens into a side face (19a, 19b) of the housing (21).

10. Brake-slip-controlled and fluid-pressure-actuated braking device for a vehicle, containing at least one pressure control valve arrangement (7) according to one of the preceding claims.

11. Method for producing a pressure control valve arrangement (7) for controlling the fluid pressure in an ABS brake system of a vehicle in such a way that, while there is a tendency of individual wheels of the vehicle to lock, the brake pressure in at least one associated brake cylinder (6) can be adaptively adjusted, wherein at least one diaphragm valve (14a, 14b) is accommodated in a housing (21) of the pressure control valve arrangement (7), said diaphragm valve having a diaphragm (25a, 25b) as the valve body, which diaphragm can be acted upon by introducing a pressure medium into a control chamber (26a, 26b) that is covered on the outside of the housing by a respective cover (27a, 27b) in such a way that the control chamber (26a, 26b) is formed between the diaphragm (25a, 25b) and the cover (27a, 27b), and wherein blind holes (29a, 29b), which extend in the cover (27a, 27b) substantially perpendicularly to the plane of the cover (27a, 27b), are formed in the cover (27a, 27b), the blind hole opening (32a) of at least one (29a) of said blind holes leading into the control chamber (26a, 26b), and the blind hole opening (32b) of at least one other (29b) of said blind holes leading into a pressure medium channel formed in the housing (21), and at least one (29a) and the other (29b) of said blind holes being fluidically interconnected by at least one transverse channel (30), comprising the following steps:
a) primary shaping of the cover (27a, 27b),
**characterized in that,**
b) during the primary shaping of the cover (27a, 27b), a mandrel-type core of the primary shaping die is positioned in such a way that the transverse channel (30) has an acute angle relative to the plane of the cover (27a, 27b) and opens by means of a transverse channel opening (31) into the control chamber (26a, 26b), and
c) at least two blind holes (29a, 29b) are produced at positions in the cover (27a, 27b) such that they are interconnected by the transverse channel (30), and the transverse channel opening (31) at least partially overlaps the blind hole opening (32a) of one of the blind holes (29a) connected by the transverse channel (30).

12. Method for producing a pressure control valve arrangement according to Claim 11, **characterized by** production of the blind holes (29a, 29b) together with the transverse channel (30) in a single operation, during the primary shaping process for the cover (27a, 27b), by providing corresponding blind hole cores on the primary shaping die.

13. Method for producing a pressure control valve arrangement according to Claim 11, **characterized by** production of the blind holes (29a, 29b) by machining, e.g. drilling, after the primary shaping of the cover (27a, 27b).

14. Method for producing a pressure control valve arrangement according to one of Claims 11 to 13, **characterized in that** the cover (27a, 27b) is integrally injection molded.

## Revendications

1. Ensemble à soupape modulatrice de pression à commander la pression d'un fluide dans un système de freinage antipatinage d'un véhicule d'une telle façon, qu'en présence d'une tendance à bloquer des roues individuelles du véhicule, la pression de freinage dans au moins un cylindre de frein (6) affecté peut être ajustée de manière adaptive, à au moins une soupape à membrane (14a, 14b) étant reçue dans un carter (21) de l'ensemble à soupape modulatrice de pression, qui comprend une membrane (25a, 25b) en tant que corps de soupape, qui est apte à être soumise à un milieu sous pression amené dans une chambre de commande (26a, 26b), laquelle est recouverte par un couvercle (27a, 27b) du côté extérieur dudit carter, ce couvercle étant produit par transformation primaire comme le moulage par injection, d'une telle façon, que ladite chambre de commande (26a, 26b) est formée entre ladite membrane (25a, 25b) et ledit couvercle (27a, 27b), et dans lequel des trous borgnes (29a, 29b) sont formés dans ledit couvercle (27a, 27b), qui s'étendent essentiellement orthogonalement au plan dudit couvercle (27a, 27b), dont au moins un trou borgne (29a) débouche par son orifice d'embouchure du trou borgne (32a) dans ladite chambre de commande (26a, 26b), pendant qu'au moins un autre trou borgne (29b) débouche dans une conduite de milieu sous pression, qui est formée dans ledit carter (21), par son orifice d'embouchure de trou borgne (32b), et dans lequel ledit au moins un trou borgne (29a) et ledit autre trou borgne (29b) se trouvent en communication fluidique l'un à l'autre par au moins un conduit transversal (30), **caractérisé en ce que**, relativement au plan dudit couvercle (27a, 27b), ledit conduit transversal (30) présente un angle aigu et débouche dans ladite chambre de commande (26a, 26b) ou dans ledit conduit de milieu sous pression, du côté d'une extrémité, moyennant un orifice d'embouchure de conduit transversal (31), audit orifice d'embouchure de conduit transversal (31) et ledit orifice d'embouchure de trou borgne (32a) d'un trou parmi lesdits trous borgnes (29a) reliés par ledit conduit transversal (30), se chevauchant l'un l'autre au moins en partie.

2. Ensemble à soupape modulatrice de pression selon la revendication 1, **caractérisé en ce que** ledit orifice d'embouchure du conduit transversal (31) présente une coupe transversale essentiellement ovale.

3. Ensemble à soupape modulatrice de pression selon la revendication 1 or 2, **caractérisé en ce que** la coupe transversale dudit conduit transversal (30) est cylindrique dans un plan orthogonal sur l'axe central dudit conduit transversal (30).

4. Ensemble à soupape modulatrice de pression selon une quelconque des revendications précédentes, **caractérisé en ce que** ledit couvercle (27a, 27b) est une pièce formée par moulage par injection en matière synthétique ou en aluminium.

5. Ensemble à soupape modulatrice de pression selon la revendication 4, **caractérisé en ce que** ledit conduit transversal (30) débouche, à son autre extrémité, dans l'autre trou borgne (29b) relié par ledit conduit transversal (30), à un angle aigu, relativement à l'axe central du trou.

6. Ensemble à soupape modulatrice de pression selon une quelconque des revendications précédentes, **caractérisé en ce que** ledit conduit transversal (30) se termine du côté de fond dans l'autre trou borgne (29b).

7. Ensemble à soupape modulatrice de pression selon une quelconque des revendications précédentes, **caractérisé en ce que** ledit couvercle (27a, 27b), ensemble avec lesdits trous borgnes (29a, 29b) et ledit conduit transversal (30) présente une configuration intégrale.

8. Ensemble à soupape modulatrice de pression selon la revendication 4, **caractérisé en ce que** des soupapes régulatrices électromagnétiques (15a, 15b), commandable par un module électronique de commande (10), sont disposées pour le pilotage desdites soupapes à membrane (14a, 14b).

9. Ensemble à soupape modulatrice de pression selon une quelconque des revendications précédentes, **caractérisé en ce qu'**au moins un couvercle (27a, 27b) est conçu d'une telle façon, qu'il ferme, en même temps, un alésage (33) formé dans ledit carter (21) et non servant à la connexion avec ladite chambre de commande (26a, 26b), outre à sa fonction en tant que corps de fermeture pour ladite chambre de commande (26a, 26b).

10. Dispositif de freinage d'un véhicule, réglé par glissement au freinage et commandé moyennant un milieu sous pression, comprenant au moins un ensemble à soupape modulatrice de pression /7) selon une quelconque des revendications précédentes.

11. Procédé à fabriquer un ensemble à soupape modulatrice de pression (7) pour la régulation de la pression d'un fluide dans un système de freinage anti dérapage d'un véhicule, d'une telle manière, qu'en présence d'une tendance à bloquer des roues individuelles dudit véhicule, la pression de freinage dans au moins un cylindre de frein (6) affecté peut être ajustée de manière adaptive, à au moins une soupape à membrane (14a, 14b) étant reçue dans un carter (21) de l'ensemble à soupape modulatrice de pression, qui comprend une membrane (25a, 25b) en tant que corps de soupape, qui est apte à être soumise à un milieu sous pression amené dans une chambre de commande (26a, 26b), laquelle est recouverte par un couvercle (27a, 27b) du côté extérieur dudit carter, ce couvercle étant produit par transformation primaire comme le moulage par injection, d'une telle façon, que ladite chambre de commande (26a, 26b) est formée entre ladite membrane (25a, 25b) et ledit couvercle (27a, 27b), et dans lequel des trous borgnes (29a, 29b) sont formés dans ledit couvercle (27a, 27b), qui s'étendent essentiellement orthogonalement au plan dudit couvercle (27a, 27b), dont au moins un trou borgne (29a) débouche par son orifice d'embouchure du trou borgne (32a) dans ladite chambre de commande (26a, 26b), pendant qu'au moins un autre trou borgne (29b) débouche dans une conduite de milieu sous pression, qui est formée dans ledit carter (21), par son orifice d'embouchure de trou borgne (32b), et dans lequel ledit au moins un trou borgne (29a) et ledit autre trou borgne (29b) se trouvent en communication fluidique l'un à l'autre par au moins un conduit transversal (30),
comprenant les étapes suivantes :
a) moulage primaire dudit couvercle (27a, 27b),
**caractérisé en ce**
b) au cours du moulage primaire dudit couvercle (27a, 27b), un noyau en forme de mandrin de l'outil de moulage primaire est positionné d'une telle façon, que, par rapport au plan dudit couvercle (27a, 27b), ledit conduit transversal (31) présente un angle aigu et débouche dans ladite chambre de commande (26a, 26b) moyennant un orifice d'embouchure du conduit transversal (3), et
c) qu'on forme au moins deux trous borgnes (29a, 29b) aux telles positions dudit couvercle (27a, 27b), qu'ils soient reliés l'un à l'autre par ledit conduit transversal (30) et que ledit orifice d'embouchure du conduit transversal (31) et ledit orifice d'embouchure de trou borgne (32) d'un trou parmi lesdits trous borgnes (29a), qui sont reliés par ledit conduit transversal (30), se chevauchent l'un l'autre, au moins en partie.

12. Procédé à fabriquer un ensemble à soupape modulatrice de pression selon la revendication 11, **caractérisé par** la formation desdits trous borgnes (29a, 29b) ensemble avec ledit conduit transversal (30) au cours du processus de moulage primaire dudit couvercle (27a, 27b) en une seule étape de travail par l'arrangement des noyaux de trou borgne appropriés audit outil de moulage primaire.

13. Procédé à fabriquer un ensemble à soupape modulatrice de pression selon la revendication 11, **caractérisé par** la formation desdits trous borgnes (29a, 29b) après le moulage primaire dudit couvercle (27a, 27b) par usinage en enlèvement des copeaux, par exemple le perçage.

14. Procédé à fabriquer un ensemble à soupape modulatrice de pression selon une quelconque des revendications 11 à 13, **caractérisé en ce que** ledit couvercle (27a, 27b) est moulé par injection en une pièce intégrale.
